(19) Europäisches Patentamt / European Patent Office / Office européen des brevets

(11) **EP 3 667 777 B1**

(12) **EUROPEAN PATENT SPECIFICATION**

(45) Date of publication and mention
of the grant of the patent:
**28.12.2022 Bulletin 2022/52**

(21) Application number: **18854257.5**

(22) Date of filing: **30.08.2018**

(51) International Patent Classification (IPC):
$H01M\ 4/36^{(2006.01)}$    $H01M\ 4/38^{(2006.01)}$
$H01M\ 4/587^{(2010.01)}$    $H01M\ 4/62^{(2006.01)}$
$H01M\ 10/0525^{(2010.01)}$    $H01M\ 4/48^{(2010.01)}$
$H01M\ 4/485^{(2010.01)}$    $H01M\ 4/58^{(2010.01)}$
$H01M\ 4/02^{(2006.01)}$

(52) Cooperative Patent Classification (CPC):
**H01M 4/366; H01M 4/386; H01M 4/483;
H01M 4/485; H01M 4/62; H01M 4/625;
H01M 10/0525;** H01M 2004/021; H01M 2004/027;
Y02E 60/10

(86) International application number:
**PCT/KR2018/010099**

(87) International publication number:
**WO 2019/050216 (14.03.2019 Gazette 2019/11)**

(54) **NEGATIVE ELECTRODE ACTIVE MATERIAL, NEGATIVE ELECTRODE INCLUDING THE NEGATIVE ELECTRODE ACTIVE MATERIAL, AND SECONDARY BATTERY INCLUDING THE NEGATIVE ELECTRODE**

NEGATIVES AKTIVES ELEKTRODENMATERIAL, NEGATIVE ELEKTRODE MIT DIESEM MATERIAL UND SEKUNDÄRBATTERIE MIT DER NEGATIVEN ELEKTRODE

MATIÈRE ACTIVE D'ÉLECTRODE NÉGATIVE, ÉLECTRODE NÉGATIVE COMPRENANT CETTE MATIÈRE, ET BATTERIE SECONDAIRE COMPRENANT L'ÉLECTRODE NÉGATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2017 KR 20170116083**

(43) Date of publication of application:
**17.06.2020 Bulletin 2020/25**

(73) Proprietor: **LG Energy Solution, Ltd.**
**Seoul 07335 (KR)**

(72) Inventors:
• **CHOI, Jung Hyun**
**Daejeon 34122 (KR)**
• **LEE, So Ra**
**Daejeon 34122 (KR)**
• **KIM, Eun Kyung**
**Daejeon 34122 (KR)**
• **LEE, Yong Ju**
**Daejeon 34122 (KR)**

• **SHIN, Sun Young**
**Daejeon 34122 (KR)**
• **SONG, Hyeon Min**
**Daejeon 34122 (KR)**
• **KIM, Jee Eun**
**Daejeon 34122 (KR)**
• **KWON, Seo Young**
**Daejeon 34122 (KR)**
• **OH, Il Geun**
**Daejeon 34122 (KR)**
• **LEE, Jae Young**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
KR-A- 20110 046 076    KR-A- 20150 034 563
KR-A- 20170 046 114    KR-A- 20170 048 211
US-A1- 2016 365 567    US-A1- 2017 117 543

- Michael E Spahr: "Carbonaceous Anode Materials and Conductive Additives as Key To Higher Performance Lithium-ion Batteries 7 th International Automotive Battery Conference Europe 31 January 2017", , 31 December 2017 (2017-12-31), XP055728727, Retrieved from the Internet: URL:http://cii-resource.com/cet/AABE-03-17/Presentations/BTMT/Spahr_Michael.pdf [retrieved on 2020-09-08]
- YANG YONG ET AL: "Effects of lithium fluoride coating on the performance of nano-silicon as anode material for lithium-ion batteries", MATERIALS LETTERS, vol. 184, 3 August 2016 (2016-08-03), pages 65-68, XP029760714, ISSN: 0167-577X, DOI: 10.1016/J.MATLET.2016.08.006 [retrieved on 2016-08-03]
- Timcal Graphite: "imerys-graphite-and-carbon SPECIALTY CARBONS FOR THE POSITIVE ELECTRODE OF LITHIUM-ION BATTERIES", , 31 December 2014 (2014-12-31), XP055728751, Retrieved from the Internet: URL:http://www.imerys-graphite-and-carbon.com/wordpress/wp-app/uploads/2017/08/Specialty-Carbons-for-the-Positive-Electrode-of-Lithium-Ion-Batteries.pdf [retrieved on 2020-09-08]
- "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoParticleCharacterization(2)_1962085150.pdf [retrieved on 2020-09-07]
- YANG, YONG: "Pitch carbon and LiF co-modified Si-based anode material for lithium ion batteries", Ceramics International, vol. 43, no. 12, 15 August 2017 (2017-08-15), pages 8590-8595, XP085042062, ISSN: 0272-8842, DOI: 10.1016/j.ceramint.2017.03.125

**Description**

**TECHNICAL FIELD**

**Cross-reference to Related Applications**

This application claims the benefit of Korean Patent Application No. 10-2017-0116083, filed on September 11, 2017, in the Korean Intellectual Property Office.

**Technical Field**

The present invention relates to a negative electrode active material, a negative electrode including the negative electrode active material, and a secondary battery including the negative electrode, wherein, specifically, the negative electrode active material includes a carbonaceous matrix including a fist particle and a second particle, the first particle includes a silicon core; an oxide layer which is disposed on the silicon core and includes $SiO_x$ (0<x≤2), and lithium silicate; and a coating layer which covers at least a portion of a surface of the oxide layer and includes LiF, and the second particle is flaky graphite.

**BACKGROUND ART**

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased. Among these secondary batteries, lithium secondary batteries having high energy density, i.e., high capacity, have been subjected to considerable research and have been commercialized and widely used.

In general, a secondary battery is composed of a positive electrode, a negative electrode, an electrolyte, and a separator. The negative electrode includes a negative electrode active material in which lithium ions from the positive electrode are intercalated and deintercalated, and silicon-based particles having high discharge capacity may be used as the negative electrode active material. However, the silicon-based particle, such as $SiO_x$ (0<x≤2), has low initial efficiency and its volume is excessively changed during charge and discharge. Thus, there is a limitation in that lifetime of the battery is reduced.

Typically, techniques for forming a coating layer on a surface of a silicon-based particle have been used to address this limitation. For example, a technique of forming a carbon coating layer on the surface of the silicon-based particle is being used (Korean Patent Application Laid-open Publication No. 10-2015-0112746).

However, excessive volume expansion of the silicon-based particle is not easily controlled only by the carbon coating layer, and a side reaction of the silicon-based particle with an electrolyte solution is not effectively controlled.

Thus, there is a need to develop a negative electrode active material which may effectively control the changes in volume during charge and discharge of the secondary battery and the side reaction with the electrolyte solution.

US 20160365567 relates to silicon/graphite/carbon composites, to a method for producing them, and to their use as electrode active material in lithium ion batteries.

Yang et al. reports on a study where lithium fluoride (LiF) is introduced to coat commercial nano silicon to form an artificial solid electrolyte interface (SEI) film.

US 20170117543 relates to a negative electrode active material particle and a method for preparing the same.

[Prior Art Document]

[Patent Document]

Korean Patent Application Laid-open Publication No. 10-2015-0112746

US20160365567

US20170117543

Non patent document Yang et al., Materials Letters 184 (2016) 65-68

## DISCLOSURE OF THE INVENTION

### TECHNICAL PROBLEM

An aspect of the present invention provides a negative electrode active material, which may effectively control changes in volume during charge and discharge of a secondary battery and a side reaction with an electrolyte solution, a negative electrode including the same, and a secondary battery including the negative electrode.

### TECHNICAL SOLUTION

According to an aspect of the present invention, there is provided a negative electrode active material which includes a carbonaceous matrix including a fist particle and a second particle, wherein the first particle includes a silicon core; an oxide layer which is disposed on the silicon core and includes $SiO_x$ ($0<x\leq2$), and lithium silicate; and a coating layer which covers at least a portion of a surface of the oxide layer and includes LiF, and the second particle is flaky graphite.

According to another aspect of the present invention, there is provided a negative electrode including the negative electrode active material and a secondary battery including the negative electrode.

### ADVANTAGEOUS EFFECTS

According to a negative electrode active material according to an embodiment of the present invention, initial efficiency and discharge capacity of a battery may be improved by a coating layer including LiF, and an electrode thickness change rate may be reduced. Also, since compositing of first particles and second particles may be smoothly performed by flaky graphite, capacity retention may be improved and the electrode thickness change rate may be further reduced.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a schematic view of a negative electrode active material of the present invention;
FIG. 2 is a schematic view of a first particle included in the negative electrode active material according to the present invention;
FIG. 3 is a graph showing the results of time-of-flight secondary ion mass spectrometry (ToF-SIMS) of Example 1 and Comparative Example 1.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

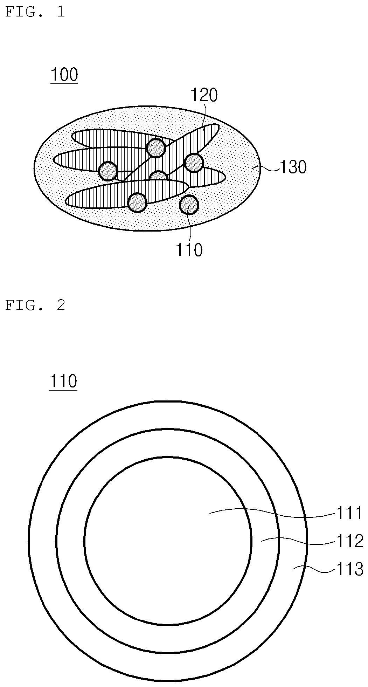

Referring to FIGS. 1 and 2, a negative electrode active material 100 includes a carbonaceous matrix 130 including a fist particle 110 and a second particle 120, wherein the first particle 110 includes a silicon core 111; an oxide layer 112 which is disposed on the silicon core 111 and includes $SiO_x$ ($0<x\leq2$); and a coating layer 113 which covers at least a portion of a surface of the oxide layer and includes LiF, and the second particle 120 may be flaky graphite.

The silicon core may include silicon (Si), and, specifically, may be formed of Si. Accordingly, capacity of a secondary battery may be increased.

An average particle diameter ($D_{50}$) of the silicon core may be in a range of 40 nm to 400 nm, particularly 60 nm to 200 nm, and more particularly 80 nm to 150 nm. In a case in which the average particle diameter satisfies the above range, the nano-sized silicon core does not break easily during charge and discharge of the battery and intercalation and deintercalation of lithium may be effectively performed. In the present specification, the average particle diameter ($D_{50}$) may be defined as a particle diameter at 50% in the cumulative particle diameter distribution. The average particle diameter ($D_{50}$), for example, may be measured by using a laser diffraction method. The laser diffraction method may generally measure a particle diameter ranging from a submicron level to a few mm and may obtain highly repeatable and high-resolution results.

The oxide layer may be disposed on the silicon core. Specifically, the oxide layer may cover at least a portion of a surface of the silicon core.

The oxide layer includes $SiO_x$ ($0<x\leq2$) and Lithium silicate, and may specifically include $SiO_2$. Accordingly, an excessive change in volume of the silicon core may be controlled during charge and discharge of the secondary battery.

The oxide layer may have a thickness of 0.01 nm to 20 nm, particularly 0.05 nm to 15 nm, and more particularly 0.1 nm to 10 nm. In a case in which the thickness satisfies the above range, the excessive change in volume of the silicon core may be effectively controlled while the capacity of the secondary battery is maintained.

The coating layer may cover at least a portion of the surface of the oxide layer. Specifically, the coating layer may be disposed to cover the entire surface of the oxide layer or may be disposed to cover the portion of the surface.

The coating layer may include LiF, and, specifically, may be composed of LiF. Since the LiF of the coating layer may act as a kind of a solid electrolyte interface (SEI), a side reaction of the silicon core with an electrolyte solution may be prevented, lithium ion conductivity may be improved, and the excessive change in volume of the silicon core may be controlled. Accordingly, initial efficiency of a negative electrode may be improved. Specifically, although the present invention is not limited thereto, the LiF included in the coating layer may be composed of a crystalline phase and an amorphous phase due to a heat treatment that is applied during the preparation of the negative electrode active material. In this case, the lithium ion conductivity may be improved due to an interface between the crystalline phase and the amorphous phase.

The coating layer may be included in an amount of 0.05 wt% to 25 wt%, particularly 0.1 wt% to 20 wt%, and more particularly 0.5 wt% to 15 wt% based on a total weight of the negative electrode active material. In a case in which the amount of the coating layer satisfies the above range, the side reaction of the silicon core with the electrolyte solution may be effectively prevented, the lithium ion conductivity may be effectively improved, and the excessive change in volume of the silicon core may be effectively controlled. Accordingly, the initial efficiency of the negative electrode may be effectively improved.

The coating layer may have a thickness of 0.01 nm to 50 nm, particularly 0.05 nm to 15 nm, and more particularly 0.1 nm to 10 nm. In a case in which the thickness of the coating layer satisfies the above range, the above-described effect of the coating layer may be further improved.

The oxide layer further includes lithium silicate. The lithium silicate may be formed when the oxide layer and the coating layer, which are in an appropriate ratio, are heat-treated at a predetermined heat treatment temperature during the formation of the carbonaceous matrix. That is, the lithium silicate may be a byproduct formed by reaction of the LiF with the oxide layer. Since initial irreversible capacity of the battery may be reduced by the lithium silicate, initial efficiency of the battery may be improved. The lithium silicate may include at least one of $Li_2SiO_3$, $Li_4SiO_4$, and $Li_2Si_2O_5$, and may specifically include $Li_2SiO_3$.

The second particle may be flaky graphite. Specifically, the flaky graphite may be at least one selected from natural graphite, artificial graphite, and graphite-based particles prepared by pulverizing natural graphite or artificial graphite. Since the second particle is included in the negative electrode active material, a conductive path may be secured in an active material layer. Furthermore, when compared with spherical graphite, since the flaky graphite has a plate shape, the first particle and the second particle may be aggregated with higher density in a process of compositing the first particle and the second particle. Thus, energy density of the prepared negative electrode may be improved, a thinner electrode may be prepared, and battery resistance may be reduced.

The flaky graphite may have a Brunauer-Emmett-Teller (BET) specific surface area of 1 $m^2/g$ to 200 $m^2/g$, particularly 1.5 $m^2/g$ to 100 $m^2/g$, and more particularly 2 $m^2/g$ to 50 $m^2/g$. In a case in which the BET specific surface area satisfies the above range, since the first particle may be effectively disposed between the second particles, the compositing of the first particle and the second particle may be easy.

A weight ratio of the first particle to the second particle may be in a range of 1:9 to 9:1, particularly 2:8 to 8:2, and more particularly 4:6 to 7:3. In a case in which the weight ratio is satisfied, since the first particle and the second particle may be stably composited simultaneously with an improvement in the capacity of the battery, stability of the battery may be improved.

Referring to FIG. 1, the negative electrode active material may include a structure in which the first particle and the second particle are composited by being in contact with each other.

The carbonaceous matrix may be present in the form of covering at least a portion of the first particle and the second particle, and, specifically, the carbonaceous matrix may be present in the form of covering all of the first particle and the second particle.

The carbonaceous matrix may include at least one of amorphous carbon and crystalline carbon.

The crystalline carbon may further improve conductivity of the negative electrode active material. The crystalline carbon may include at least one selected from the group consisting of fullerene, carbon nanotubes, and graphene.

The amorphous carbon may suppress the expansion of the silicon core by appropriately maintaining strength of the carbonaceous matrix. The amorphous carbon may include at least one carbide selected from the group consisting of tar, pitch and other organic materials or may include a carbon-based material formed by using hydrocarbon as a source of chemical vapor deposition.

The carbides of the other organic materials may include carbides of organic materials selected from sucrose, glucose, galactose, fructose, lactose, mannose, ribose, aldohexose, ketohexose, and combinations thereof.

The hydrocarbon may be a substituted or unsubstituted aliphatic or alicyclic hydrocarbon, or a substituted or unsubstituted aromatic hydrocarbon. Aliphatic or alicyclic hydrocarbon of the substituted or unsubstituted aliphatic or alicyclic hydrocarbon may include methane, etherin, ethylene, acetylene, propane, butane, butene, pentane, isobutane, or hexane. Aromatic hydrocarbon of the substituted or unsubstituted aromatic hydrocarbon may include benzene, toluene, xylene, styrene, ethylbenzene, diphenylmethane, naphthalene, phenol, cresol, nitrobenzene, chlorobenzene, indene, coumarone, pyridine, anthracene, or phenanthrene.

The carbonaceous matrix may be included in an amount of 5 wt% to 50 wt%, particularly 10 wt% to 45 wt%, and more particularly 12 wt% to 40 wt% based on the total weight of the negative electrode active material. In a case in which the amount of the carbonaceous matrix satisfies the above range, the conductive path may be effectively secured. Simultaneously, since the carbonaceous matrix may effectively maintain bonding of the first particle and the second particle, the volume expansion of the negative electrode active material may be effectively controlled.

A method of preparing a negative electrode active material according to another embodiment of the present invention may include: preparing a silicon core having a surface on which an oxide layer including $SiO_x$ ($0<x\leq2$) is disposed; preparing a first particle by forming a coating layer including LiF on the oxide layer; and forming a carbonaceous matrix including a particle in which the first particle and a second particle, as flaky graphite, are composited.

In the preparing of the silicon core having a surface on which the oxide layer including $SiO_x$ ($0<x\leq2$) is disposed, the oxide layer may be formed by heat treating the silicon core in oxygen or air, or the oxide layer may be formed on the silicon core by a milling process. However, the present invention is not necessarily limited thereto.

In the preparing of the first particle by forming the coating layer including LiF on the oxide layer, the coating layer may be formed by the following method.

The coating layer may be formed by the method in which the silicon core having the oxide layer formed on the surface thereof is ground and mixed by milling with LiF. Alternatively, after the silicon core is dispersed in a solvent, the coting layer may be formed by mixing lithium acetate and ammonium fluoride with the dispersed solution. As another example, the coating layer may be formed by disposing LiF on the oxide layer through sputtering. However, the present invention is not necessarily limited to the above method.

The forming of the carbonaceous matrix may include the following method.

After a mixed solution is prepared by dispersing the first particles in a solvent, the second particles and pitch or an organic solution, which may be a carbon source, are dispersed in the mixed solution to prepare a slurry. The carbonaceous matrix may be formed by heat treating and then grinding the slurry, and compositing may be achieved at the same time. Also, the slurry is subjected to spray drying and then grinding to form the carbonaceous matrix, and compositing may be achieved at the same time. Alternatively, after only the first particle and the second particle are mixed and heat-treated to form a secondary particle, the carbonaceous matrix may be formed on a surface of the secondary particle by using chemical vapor deposition (CVD) or by carbonizing after being mixed with an organic material such as pitch. However, the present invention is not necessarily limited to the above method.

A negative electrode according to another embodiment of the present invention may include a negative electrode active material, and, herein, the negative electrode active material is the same as the negative electrode active material of the above-described embodiments. Specifically, the negative electrode may include a current collector and a negative electrode active material layer disposed on the current collector. The negative electrode active material layer may include the negative electrode active material. Furthermore, the negative electrode active material layer may further include a binder and/or a conductive agent.

The current collector is not particularly limited as long as it has conductivity without causing adverse chemical changes in the battery. For example, copper, stainless steel, aluminum, nickel, titanium, fired carbon, or aluminum or stainless steel that is surface-treated with one of carbon, nickel, titanium, silver, or the like may be used as the current collector. Specifically, a transition metal that adsorbs carbon well, such as copper or nickel, may be used as the current collector. The current collector may have a thickness of 6 μm to 20 μm, but the thickness of the current collector is not limited thereto.

The binder may include at least one selected from the group consisting of a polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropyl cellulose, regenerated cellulose, polyvinylpyrrolidone, tetrafluoroethylene, polyethylene, polypropylene, polyacrylate, an ethylene-propylene-diene monomer (EPDM), a sulfonated EPDM, a styrene-butadiene rubber (SBR), a fluorine rubber, polyacrylic acid, and polymers in which hydrogen thereof is substituted with lithium (Li), sodium (Na), or calcium (Ca), and may also include various copolymers thereof.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as, aluminum powder, and nickel powder; conductive whiskers such as zinc oxide whiskers and potassium titanate whiskers; conductive metal oxide such as titanium oxide; or polyphenylene derivatives, may be used.

A secondary battery according to another embodiment of the present invention may include a negative electrode, a positive electrode, a separator disposed between the positive electrode and the negative electrode, and an electrolyte, and the negative electrode is the same as the above-described negative electrode. Since the negative electrode has been described above, detailed descriptions thereof will be omitted.

The positive electrode may include a positive electrode collector and a positive electrode active material layer which is formed on the positive electrode collector and includes a positive electrode active material.

In the positive electrode, the positive electrode collector is not particularly limited as long as it has conductivity without causing adverse chemical changes in the batteries, and, for example, stainless steel, aluminum, nickel, titanium, fired carbon, or aluminum or stainless steel that is surface-treated with one of carbon, nickel, titanium, or silver may be used. Also, the positive electrode collector may typically have a thickness of 3 μm to 500 μm and may have a surface with fine roughness to improve adhesion to the positive electrode active material. The positive electrode collector may be used in various shapes, for example, a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide ($LiCoO_2$) or lithium nickel oxide ($LiNiO_2$), or a compound substituted with one or more transition metals; lithium iron oxides such as $LiFe_3O_4$; lithium manganese oxides such as $Li_{1+c1}Mn_{2-c1}O_4$ ($0 \leq c1 \leq 0.33$), $LiMnO_3$, $LiMn_2O_3$, and $LiMnO_2$; lithium copper oxide ($Li_2CuO_2$); vanadium oxides such as $LiV_3O_8$, $V_2O_5$, and $Cu_2V_2O_7$; nickel (Ni)-site type lithium nickel oxide expressed by a chemical formula of $LiNi_{1-c2}M_{c2}O_2$ (where M is at least one selected from the group consisting of cobalt (Co), manganese (Mn), aluminum (Al), copper (Cu), iron (Fe), magnesium (Mg), boron (B), and gallium (Ga), and c2 satisfies $0.01 \leq c2 \leq 0.3$); lithium manganese composite oxide expressed by a chemical formula of $LiMn_{2-c3}M_{c3}O_2$ (where M is at least one selected from the group consisting of Co, Ni, Fe, chromium (Cr), zinc (Zn), and tantalum (Ta), and c3 satisfies $0.01 \leq c3 \leq 0.1$) or $Li_2Mn_3MO_8$ (where M is at least one selected from the group consisting of Fe, Co, Ni, Cu, and Zn); and $LiMn_2O_4$ having a part of Li being substituted with alkaline earth metal ions, but the positive electrode active material is not limited thereto. The positive electrode may be Li-metal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the positive electrode conductive agent may be graphite such as natural graphite and artificial graphite; a carbon-based material such as carbon black, acetylene black, Ketjen black, channel black, furnace black, lamp black, thermal black, and carbon fibers; metal powder, such as copper powder, nickel powder, aluminum powder, and silver powder, or metal fibers; conductive whiskers such as zinc oxide whiskers and potassium titanate whiskers; conductive metal oxide such as titanium oxide; or conductive polymers such as polyphenylene derivatives, and one alone or a mixture of two or more thereof may be used.

Also, the positive electrode binder functions to improve binding between positive electrode active material particles and adhesion between the positive electrode active material and the positive electrode collector. Specific examples of the positive electrode binder may be polyvinylidene fluoride (PVDF), a polyvinylidene fluoride-hexafluoropropylene copolymer (PVDF-co-HEP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluoro rubber, or various copolymers thereof, and one alone or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, any one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention.

Example and Comparative Examples

Example 1: Preparation of Battery

(1) Preparation of Negative Electrode Active Material

10 g of silicon (Si) having a maximum particle diameter ($D_{max}$) of 45 $\mu$m and 0.2 g of LiF were added to 30 g of isopropanol to prepare a mixed solution. Thereafter, the mixture was milled using zirconia beads (average particle diameter: 0.3 mm) for 30 hours at a rotational speed of the beads of 1,200 rpm. In this case, an average particle diameter ($D_{50}$) of the silicon formed was 100 nm, a thickness of $SiO_2$ formed on the surface of the silicon was 10 nm, and a thickness of LiF disposed on the $SiO_2$ was in a range of 0.01 nm to 10 nm.

Subsequently, 10 g of flaky graphite having a specific surface area of 45 m$^2$/g and 5 g of solid pitch were added to the mixed solution and then dispersed to prepare a slurry.

The slurry and ethanol/water (volume ratio=1:9) were mixed in a volume ratio of 1:10 to prepare a dispersion for spray drying. The dispersion was spray-dried under conditions including an inlet temperature of 180°C, an aspirator rate of 95%, and a feeding rate of 12 using a mini spray-dryer (manufacturer: Buchi, model: B-290 Mini Spray-Dryer). Thereafter, 10 g of the spray-dried mixture (composite) was heat-treated at 950°C in a nitrogen atmosphere to prepare a negative electrode active material. An amount of LiF (corresponding to the coating layer of the present invention) in the prepared negative electrode active material was 0.8 wt% based on a total weight of the negative electrode active material, wherein the amount of LiF was a value calculated by summing an amount of Li and an amount of fluorine (F) which were measured by inductively coupled plasma (ICP) spectrometry and ion chromatography, respectively.

(2) Preparation of Negative Electrode

The prepared negative electrode active material, fine graphite as a conductive agent, and polyacrylonitrile, as a binder, were mixed in a weight ratio of 7:2:1 to prepare 0.2 g of a mixture. A negative electrode slurry was prepared by adding 3.1 g of N-methyl-2-pyrrolidone (NMP), as a solvent, to the mixture. A 20 μm thick copper (Cu) thin film, as a negative electrode collector, was coated with the negative electrode slurry and dried. In this case, a temperature of circulating air was 80°C. Subsequently, the coated negative electrode collector was roll-pressed and dried in a vacuum oven at 130°C for 12 hours to prepare a negative electrode.

(3) Preparation of Secondary Battery

The prepared negative electrode was used and a Li-metal thin film cut into a circle of area 1.7671 cm$^2$ was used as a positive electrode. A porous polyethylene separator was disposed between the positive electrode and the negative electrode, and a lithium coin half-cell was prepared by injecting an electrolyte solution in which 0.5 wt% vinylene carbonate was dissolved and 1 M LiPF$_6$ was dissolved in a mixed solution in which a mixing volume ratio of ethyl methyl carbonate (EMC) to ethylene carbonate (EC) was 7:3.

Comparative Example 1: Preparation of Battery

(1) Preparation of Negative Electrode Active Material

A negative electrode active material was prepared in the same manner as in Example 1 except that LiF was not added during the preparation of the slurry in the preparation step of the negative electrode active material of Example 1.

(2) Preparation of Negative Electrode and Secondary Battery

A negative electrode and a secondary battery were prepared in the same manner as in Example 1 by using the negative electrode active material.

Comparative Example 2: Preparation of Battery

(1) Preparation of Negative Electrode Active Material

10 g of silicon (Si) having a maximum particle diameter (D$_{max}$) of 45 μm and 0.2 g of LiF were added to 30 g of isopropanol to prepare a mixed solution. Thereafter, the mixture was milled using zirconia beads (average particle diameter: 0.3 mm) for 30 hours at a rotational speed of the beads of 1,200 rpm. In this case, an average particle diameter (D$_{50}$) of the silicon formed was 100 nm, a thickness of SiO$_2$ formed on the surface of the silicon was 10 nm, and a thickness of LiF disposed on the SiO$_2$ was in a range of 0.01 nm to 10 nm.

Subsequently, 10 g of spherical graphite having a specific surface area of 50 m$^2$/g and 5 g of solid pitch were added to the mixed solution and then dispersed to prepare a slurry.

The slurry and ethanol/water (volume ratio=1:9) were mixed in a volume ratio of 1:10 to prepare a dispersion for spray drying. The dispersion was spray-dried under conditions including an inlet temperature of 180°C, an aspirator rate of 95%, and a feeding rate of 12 using a mini spray-dryer (manufacturer: Buchi, model: B-290 Mini Spray-Dryer). Thereafter, 10 g of the spray-dried mixture (composite) was heat-treated at 950°C in a nitrogen atmosphere to prepare a negative electrode active material. An amount of LiF (corresponding to the coating layer of the present invention) in the prepared negative electrode active material was 0.8 wt% based on a total weight of the negative electrode active material, wherein the amount of LiF was a value calculated by summing an amount of Li and an amount of F which were measured by ICP spectrometry and ion chromatography, respectively.

(2) Preparation of Negative Electrode and Secondary Battery

A negative electrode and a secondary battery were prepared in the same manner as in Example 1 by using the negative electrode active material.

Experimental Example 1: Evaluation of Discharge Capacity, Initial Efficiency, Capacity Retention, and Electrode Thickness Change Rate

The batteries of Example 1 and Comparative Examples 1 and 2 were charged and discharged to evaluate discharge capacity, initial efficiency, capacity retention, and electrode (negative electrode) thickness change rate, and the results thereof are listed in Table 1 below.

In 1st cycle and 2nd cycle, the batteries were charged and discharged at 0.1 C, and charging and discharging were performed at 0.5 C from a 3rd cycle to a 49th cycle. A 50th cycle was terminated in a charged state (state in which lithium was included in the negative electrode), the battery was disassembled to measure a thickness, and the electrode thickness change rate was then calculated.

Charge condition: CC (constant current)/CV (constant voltage) (5 mV/0.005 C current cut-off)

Discharge condition: CC (constant current) condition 1.5 V

The discharge capacity (mAh/g) and the initial efficiency (%) were derived from the results during the first charge and discharge cycle. Specifically, the initial efficiency (%) was derived by the following calculation.

$$\text{Initial efficiency (\%)} = (\text{discharge capacity after the 1st discharge/1st charge capacity}) \times 100$$

The capacity retention and the electrode thickness change rate were derived by the following calculation, respectively.

$$\text{Capacity retention (\%)} = (\text{discharge capacity in the 49th cycle/ discharge capacity in the first cycle}) \times 100$$

$$\text{Electrode thickness change rate (\%)} = (\text{amount of change in final electrode thickness/initial electrode thickness}) \times 100$$

[Table 1]

| Battery | Discharge capacity (mAh/g) | Initial efficiency (%) | Capacity retention (%) | Electrode thickness change rate (%) |
|---|---|---|---|---|
| Example 1 | 1350 | 86 | 52 | 140 |
| Comparative Example 1 | 1250 | 82 | 50 | 145 |
| Comparative Example 2 | 1300 | 83 | 35 | 170 |

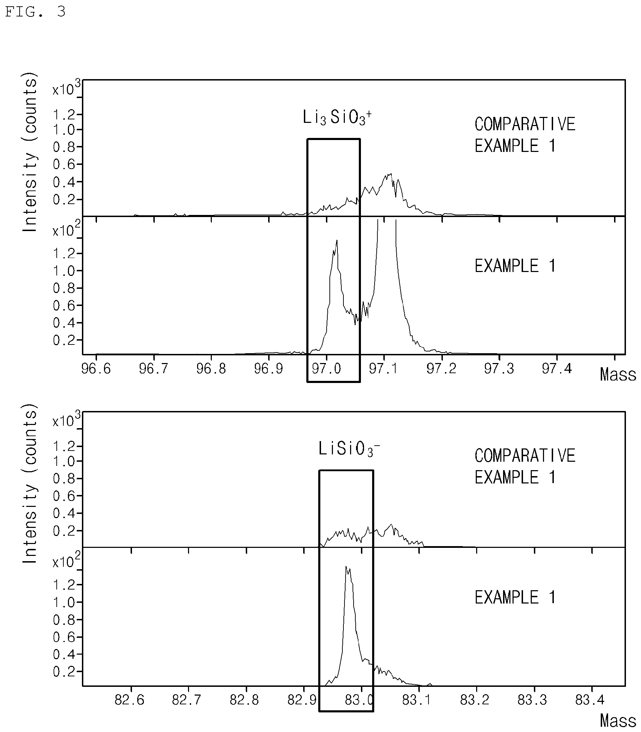

Referring to Table 1, with respect to Example 1, it may be understood that discharge capacity, initial efficiency, capacity retention, and electrode thickness change rate were all better than those of Comparative Examples 1 and 2. With respect to Comparative Example 1, since the negative electrode active material did not include LiF, a conductive path was not secured, and thus, the initial efficiency and the discharge capacity seemed to be reduced. In addition, with respect to Example 1, since lithium silicate ($Li_2SiO_3$), which was formed from LiF and $SiO_2$, may be present in the negative electrode active material, it seems that the initial efficiency and the discharge capacity may be further improved in comparison to those of Comparative Example 1 in which the lithium silicate was not present (see FIG. 3). With respect to Comparative Example 2, since the spherical natural graphite was used, compositing of the first particle and the second particle was not stably performed, and thus, it may be understood that the capacity retention and the electrode thickness change rate were poor.

**Claims**

1. A negative electrode active material comprising:

    a carbonaceous matrix including a first particle and a second particle,
    wherein the first particle comprises a silicon core;
    an oxide layer which is disposed on the silicon core and includes $SiO_x$ ($0<x\leq2$) and lithium silicate; and
    a coating layer which covers at least a portion of a surface of the oxide layer and includes LiF,
    the second particle is flaky graphite.

2. The negative electrode active material of claim 1, wherein the silicon core has an average particle diameter ($D_{50}$) of 40 nm to 400 nm, measured by using a laser diffraction method.

3. The negative electrode active material of claim 1, wherein the oxide layer has a thickness of 0.01 nm to 20 nm.

4. The negative electrode active material of claim 1, wherein the coating layer is included in an amount of 0.05 wt% to 25 wt% based on a total weight of the negative electrode active material.

5. The negative electrode active material of claim 1, wherein the coating layer has a thickness of 0.01 nm to 50 nm.

6. The negative electrode active material of claim 1, wherein the flaky graphite has a Brunauer-Emmett-Teller (BET) specific surface area of 1 $m^2$/g to 200 $m^2$/g.

7. The negative electrode active material of claim 1, wherein a weight ratio of the first particle to the second particle is in a range of 1:9 to 9:1.

8. The negative electrode active material of claim 1, wherein the carbonaceous matrix is included in an amount of 5 wt% to 50 wt% based on a total weight of the negative electrode active material.

9. The negative electrode active material of claim 1, wherein the lithium silicate comprises at least one of $Li_2SiO_3$, $Li_4SiO_4$, or $Li_2Si_2O_5$.

10. The negative electrode active material of claim 1, wherein the first particle and the second particle are in contact with each other.

11. A negative electrode comprising the negative electrode active material of any one of claims 1 to 10.

12. A secondary battery comprising:

    the negative electrode of claim 11;
    a positive electrode;
    a separator disposed between the positive electrode and the negative electrode; and
    an electrolyte.

**Patentansprüche**

1. Aktivmaterial für eine negative Elektrode, umfassend:

   eine kohlenstoffhaltige Matrix, die einen ersten Partikel und einen zweiten Partikel enthält,
   wobei der erste Partikel einen Siliziumkern umfasst;
   eine Oxidschicht, welche auf dem Siliziumkern angeordnet ist und $SiO_x$ (0<x≤2) und Lithiumsilikat enthält; und
   eine Überzugsschicht, welche mindestens einen Teil einer Oberfläche der Oxidschicht bedeckt und LiF enthält,
   der zweite Partikel ist flockiger Graphit.

2. Aktivmaterial für eine negative Elektrode gemäß Anspruch 1, wobei der Siliziumkern einen durchschnittlichen Partikeldurchmesser ($D_{50}$) von 40 nm bis 400 nm aufweist, gemessen unter Verwendung eines Laserbeugungsverfahrens.

3. Aktivmaterial für eine negative Elektrode gemäß Anspruch 1, wobei die Oxidschicht eine Dicke von 0,01 nm bis 20 nm aufweist.

4. Aktivmaterial für eine negative Elektrode gemäß Anspruch 1, wobei die Überzugsschicht in einem Anteil von 0,05 Gew.-% bis 25 Gew.-% basierend auf dem Gesamtgewicht des Aktivmaterials für eine negative Elektrode enthalten ist.

5. Aktivmaterial für eine negative Elektrode gemäß Anspruch 1, wobei die Überzugsschicht eine Dicke von 0,01 nm bis 50 nm aufweist.

6. Aktivmaterial für eine negative Elektrode gemäß Anspruch 1, wobei der flockige Graphit eine spezifische Oberfläche nach Brunauer-Emmett-Teller (BET) zwischen 1 $m^2$/g bis 200 $m^2$/g aufweist.

7. Aktivmaterial für eine negative Elektrode gemäß Anspruch 1, wobei das Gewichtsverhältnis des ersten Partikels zum zweiten Partikel in einem Bereich von 1:9 bis 9:1 liegt.

8. Aktivmaterial für eine negative Elektrode gemäß Anspruch 1, wobei die kohlenstoffhaltige Matrix in einem Anteil von 5 Gew.-% bis 50 Gew.-%, bezogen auf das Gesamtgewicht des Aktivmaterials für eine negative Elektrode, enthalten ist.

9. Aktivmaterial für eine negative Elektrode gemäß Anspruch 1, wobei das Lithiumsilikat mindestens eines von $Li_2SiO_3$, $Li_4SiO_4$ oder $Li_2Si_2O_5$ umfasst.

10. Aktivmaterial für eine negative Elektrode gemäß Anspruch 1, wobei der erste Partikel und der zweite Partikel miteinander in Kontakt sind.

11. Negative Elektrode, die das Aktivmaterial für eine negative Elektrode gemäß einem der Ansprüche 1 bis 10 enthält.

12. Sekundärbatterie umfassend:

    die negative Elektrode gemäß Anspruch 11;
    eine positive Elektrode;
    einen zwischen der positiven Elektrode und der negativen Elektrode angeordneten Separator; und
    einen Elektrolyten.

**Revendications**

1. Matériau actif d'électrode négative comprenant :

   une matrice carbonée incluant une première particule et une seconde particule,
   dans lequel la première particule comprend un noyau de silicium ;
   une couche d'oxyde qui est disposée sur le noyau de silicium et inclut du $SiO_x$ (0 < x ≤ 2) et du silicate de lithium ; et
   une couche de revêtement qui recouvre au moins une portion d'une surface de la couche d'oxyde et inclut du LiF,

la seconde particule est du graphite floconneux.

2. Matériau actif d'électrode négative selon la revendication 1, dans lequel le noyau de silicium présente un diamètre de particule moyen ($D_{50}$) de 40 nm à 400 nm, mesuré en utilisant un procédé de diffraction laser.

3. Matériau actif d'électrode négative selon la revendication 1, dans lequel la couche d'oxyde présente une épaisseur de 0,01 nm à 20 nm.

4. Matériau actif d'électrode négative selon la revendication 1, dans lequel la couche de revêtement est incluse en une quantité de 0,05 % en poids à 25 % en poids sur la base d'un poids total du matériau actif d'électrode négative.

5. Matériau actif d'électrode négative selon la revendication 1, dans lequel la couche de revêtement présente une épaisseur de 0,01 nm à 50 nm.

6. Matériau actif d'électrode négative selon la revendication 1, dans lequel le graphite floconneux présente une surface spécifique Brunauer-Emmett-Teller (BET) de 1 $m^2$/g à 200 $m^2$/g.

7. Matériau actif d'électrode négative selon la revendication 1, dans lequel un rapport pondéral de la première particule sur la seconde particule est dans une plage de 1 : 9 à 9 : 1.

8. Matériau actif d'électrode négative selon la revendication 1, dans lequel la matrice carbonée est incluse en une quantité de 5 % en poids à 50 % en poids sur la base d'un poids total du matériau actif d'électrode négative.

9. Matériau actif d'électrode négative selon la revendication 1, dans lequel le silicate de lithium comprend au moins l'un parmi $Li_2SiO_3$, Li4SiO4, ou $Li_2Si_2O_5$.

10. Matériau actif d'électrode négative selon la revendication 1, dans lequel la première particule et la seconde particule sont en contact l'une avec l'autre.

11. Électrode négative comprenant le matériau actif d'électrode négative selon l'une quelconque des revendications 1 à 10.

12. Batterie secondaire comprenant :

l'électrode négative selon la revendication 11 ;
une électrode positive ;
un séparateur disposé entre l'électrode positive et l'électrode négative ; et
un électrolyte.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170116083
- KR 1020150112746

- US 20160365567 A
- US 20170117543 A

**Non-patent literature cited in the description**

- **YANG et al.** *Materials Letters,* 2016, vol. 184, 65-68